# EUROPEAN PATENT APPLICATION

(11) **EP 1 737 233 A2**
(43) Date of publication of application: **27.12.2006**
(21) Application number: 06115682.4
(22) Date of filing: 19.06.2006
(51) Int. Cl.: H04N 7/025

(54) **Apparatuses and methods for receiving software/firmware**

(30) Priority: 22.06.2005 KR 20050054039
(71) Applicant: LG Electronics Inc., Yongdungpo-gu Seoul (KR)
(72) Inventor: Cha Sang Hoon, 120-830, Seoul (KR)
(74) Representative: Vetter, Ewald Otto

(57) **Abstract**

A host includes a plurality of tuners and a controller configured to receive a request for software such as firmware. The controller is further configured to select an unoccupied tuner from the plurality of tuners and to receive the firmware through the selected tuner.

## Description

This application claims the benefit of the Korean Patent Application No. 10-2005-0054039, filed on June 22, 2005, which is hereby incorporated by reference as if fully set forth herein.

### BACKGROUND

### Field of the Disclosure

The present disclosure relates to content broadcasting technology, and more particularly, to apparatuses and methods for receiving software including firmware.

### Background

A host, such as a cable broadcast receiver sold in North America, which may be an OpenCable digital TV or a CableReady digital TV, etc, may use a cable card or a Point of Deployment (POD) module provided by a cable system operator (SO). Alternatively, the cable broadcast receiver may have a built-in module that is a functional equivalent of the cable card. As such, the cable broadcast receiver may have a configuration that may or may not require a separate cable card.

Where a cable card is required, the cable broadcast receiver may include a slot to receive the cable card. The cable card may use Personal Computer Memory Card International Association (PCMCIA) standard that is capable of interfacing with the cable broadcast receiver.

The cable system operator may want to update its software, such as firmware in the distributed cable cards from time to time. One option for the cable system operator is to recall the cable cards, upgrade the firmware, and redistribute the cable cards to the users. This option, however, is inefficient in that too much effort and time is consumed, and further the users are inconvenienced as they may be left without a cable card in the interim. A better option is to transmit the firmware upgrade through the cable network and upgrade the cable cards while they are still installed in the cable broadcast receivers. For example, a Quadrature Amplitude Modulation (QAM) inband channel or Quadrature Phase Shift Keying Out-Of-Band (QPSK OOB) channel may be used to transmit the firmware to the cable cards. The cable broadcast receiver may use its inband tuner or Out-Of-Band (OOB) tuner, respectively, to receive and upgrade the firmware in the cable card.

Two methods may be used to upgrade the firmware through the cable network: an immediate upgrade method and a delayed upgrade method. The immediate upgrade method upgrades the firmware regardless of whether the cable broadcast receiver is powered on or on standby mode. For example, even though a program is being watched and/or listened, the immediate upgrade method would announce and perform the upgrade using an inband tuner, for example. A disadvantage is that during the upgrade, the program may be interrupted, and the user cannot watch and/or listen to the program. Further, if the program is being recorded, for example, through a Digital Video Recorder (DVR), the recording may be interrupted until the upgrade is completed.

The delayed upgrade method, on the other hand, performs an upgrade when the cable broadcast receiver is on standby mode. Accordingly, this method does not have the disadvantage of interrupting a program that the user is watching and/or listening. However, a disadvantage of the delayed upgrade method is that the cable system provider has to continuously monitor the inband channel or the OOB channel until all the cable cards have been upgraded. Further, the delayed upgrade method does not assure that the upgrade will be timely, and thus the users requiring the upgrade to access a program will not be able to do so.

### SUMMARY

The present disclosure discloses apparatuses and methods for receiving software that may obviate one or more disadvantages discussed above.

For example, the disclosure may disclose apparatuses and methods for receiving software while receiving one or more programs and services being used by a user.

Advantages, objects, and features of the invention may be apparent in part in the description which follows and in part may become apparent to those having ordinary skill in the art upon examination of the following or may be learned from practice of the invention. The objectives and other advantages of the various embodiments of the invention may be realized and attained by the structures and processes described in the written description, in the claims, and in the appended drawings.

To achieve these objects and other advantages and in accordance with the purpose of the invention, as embodied and broadly described herein, a host includes a plurality of tuners and a controller configured to receive a request for firmware. The controller is further configured to select an unoccupied tuner from the plurality of tuners to receive the firmware through the selected tuner.

In another aspect, a method includes the steps of receiving a request for firmware; selecting an unoccupied tuner from a plurality of tuners; and receiving the firmware through the selected tuner.

It is to be understood that both the foregoing general description and the following detailed description are exemplary and explanatory and should not be construed as limiting the scope of the claims.

### BRIEF DESCRIPTION OF THE DRAWINGS

The accompanying drawings, which are included to provide a further understanding of the disclosure, are incorporated herein and constitute a part of this application. The drawings together with the written description serve to explain one or more embodiment(s) of the invention. In the drawings:

FIG. 1 illustrates a schematic block diagram of an exemplary cable broadcast receiver according to one embodiment of the present invention;

FIG. 2 illustrates an exemplary table containing status of various tuners of a cable broadcast receiver according to one embodiment of the present invention;

FIG. 3 illustrates an exemplary table containing Application Identifier (ID) of an application that may occupy an inband tuner and its priority according to one embodiment of the present invention; and

FIG. 4 illustrates a exemplary flow chart describing a method for upgrading firmware of a cable card according to one embodiment of the present invention.

### DETAILED DESCRIPTION

Reference will now be made in detail to the preferred embodiments of the present invention, examples of which are illustrated in the accompanying drawings. Wherever possible, the same reference numbers will be used throughout the drawings to refer to the same or like parts for simplicity.

The description may describe a broadcast receiver including multiple inband tuners, and configured to receive software, such as firmware upgrade, while also receiving one or more applications. The applications may include broadcast programs of cable TV channels, video-on-demand (VOD), audio-on-demand (AOD), digital video recording through Digital Video Recorder (DVR), etc. The broadcast receiver may select a tuner, based on availability, importance of applications, or priority, and receive the software through the selected tuner.

Cable broadcast users routinely use several applications at once, such as cable broadcast programs and video-on-demand, one of which may recorded in a DVR while the other one is being viewed. Accordingly, a cable broadcast receiver may include several tuners, which allows the cable broadcast receiver to process a plurality of A/V streams, or contents simultaneously, and a decoder, which is capable of processing a plurality of A/V streams, as needed.

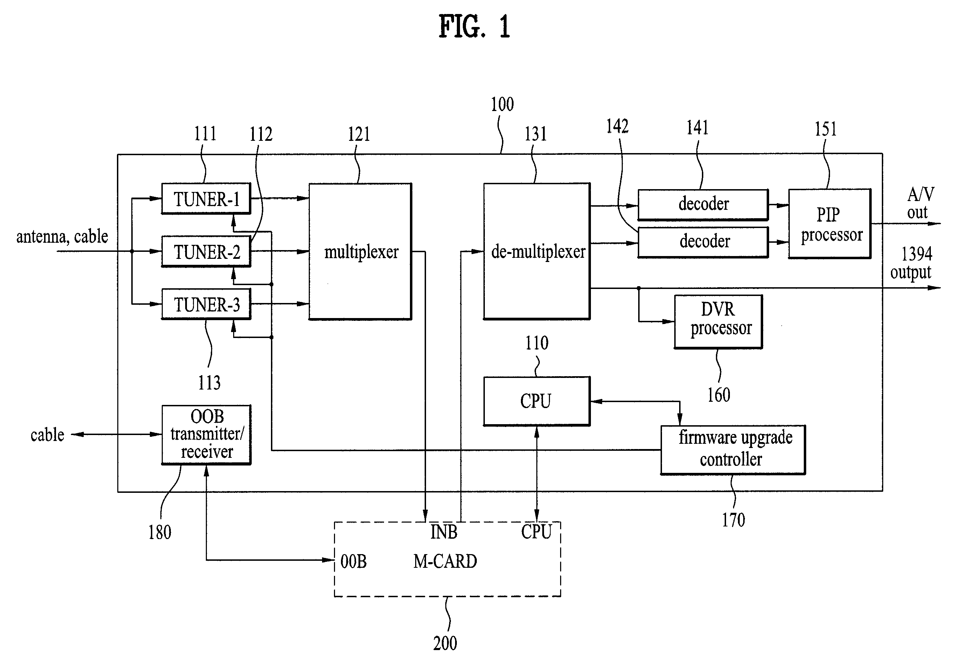

FIG. 1 illustrates an exemplary schematic block diagram of such a cable broadcast receiver according to one embodiment of the present invention. The cable broadcast receiver may include three inband tuners 111~113, a PIP processor 151 for performing a picture-in-picture (PIP) function, a DVR processor 160 for DVR functions, and a firmware upgrade controller 170. The cable broadcast receiver may further include an IEEE 1394 output interface and a cable card 200, which preferably is a bidirectional Multiple Stream CableCARD (M-CARD).

Although not shown, there may be associated a demodulator with each inband tuners 111 ~ 113, respectively. The demodulations of the demodulators may differ according to the types of signals received through each tuner. For example, terrestrial broadcasts are demodulated by Vestigial Sideband Modulation (VSB) and cable broadcasts are demodulated by QAM.

The cable broadcast receiver may further include a central processing unit (CPU) 110, a multiplexer 121, a de-multiplexer 131, a plurality of video decoders 141 and 142, and a OOB transmitter/receiver 180.

An operation of the cable broadcast receiver is now described. The CPU 110 controls the overall operation of the cable broadcast receiver. Audio/Video (A/V) streams or contents that are received by the cable broadcast receiver are tuned and demodulated by one or more tuners 111 ~ 113 and forwarded to the multiplexer 121. The multiplexer 121 multiplexes the demodulated contents and forwards them to the cable card 200. The cable card 200 descrambles at least one or more contents, if approved, through a subscriber check, for example, which is usually provided by the broadcasting station. The descrambled contents are forwarded to the de-multiplexer 131. Alternatively, where the broadcast receiver has a built-in module that is a functional equivalent of a cable card, or a descrambling module, the broadcast receiver may receive the descrambling information directly from the broadcasting station and may store it within its memory or the module for use by the built-in module or descrambling module.

The de-multiplexer 131 demultiplexes the contents and separates each content into its audio and video stream components. The individual video streams are forwarded to the video decoders 141 and 142, where video decoding is performed.

Although not shown in FIG. 1, the cable broadcast receiver may also include one or more audio decoders to decode individual audio streams and one or more data decoders to deocde data streams received by the OOB transmitter/receiver 180. The contents demultiplexed by the de-multiplexer 130 may also be output to peripheral devices thorough IEEE 1394 output interface. The contents may be output to the peripheral devices using a Digital Visual Interface (DVI) terminal or a High-Definition Multimedia Interface (HDMI) terminal, etc.

When the user selects a PIP function, outputs of corresponding video decoders 141 and 142 are processed based on a PIP process of the PIP processor 151 and then displayed on a screen. When a recording function is selected, the selected content to be recorded is processed by the DVR processor 160 into a format suitable for storage in a recording media. Here, the recording media may be a Hard Disk Drive, a video tape, a DVD, etc.

Although the controller 110 may be configured to perform the firmware upgrade if the cable broadcast receiver did not have a firmware upgrade controller, in this embodiment, the firmware upgrade controller 170 controls the firmware upgrade of the cable card 200. An operation of the firmware upgrade controller 170 is now described. The firmware controller 170 may select an available inband tuner from the inband tuners 111~113 and receive the firmware through the selected inband tuner. If there is no available inband tuner, the firmware controller 170 may be select an inband tuner based on a degree of importance of applications which are occupying the individual inband tuners. For convenience of describing the selection process, an inband tuner selected to receive the firmware will be referred to as a victim inband tuner.

When the victim inband tuner is selected, status information of the application that was occupying the victim inband tuner is stored in a memory, and then the victim inband tuner is configured to receive the firmware. Once the firmware has been received, the status information is retrieved and the victim inband tuner is reconfigured such that the previous interrupted application occupying the victim inband tuner can resume operation.

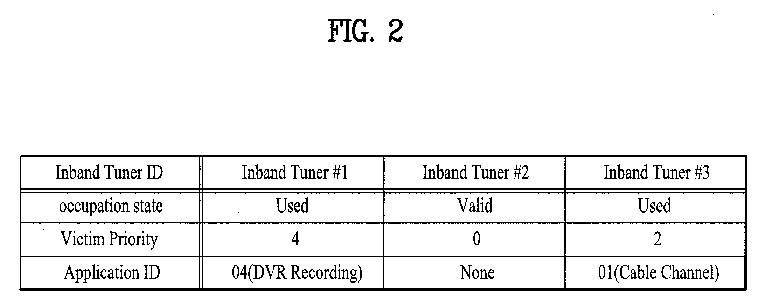

In order for the firmware upgrade controller 170 to select an inband tuner to receive firmware upgrade, the firm upgrade controller 170 needs access to status information pertaining to the individual inband tuners 111 ~ 113 in order to make a proper selection. To this end, the cable broadcast receiver maintains an inband tuner status table as illustrated in FIG. 2, which is accessed by the firmware upgrade controller 170 in order to make an inband tuner selection.

FIG. 2 illustrates an exemplary table containing status information of various inband tuners according to one embodiment of the present invention. The table includes an Inband Tuner ID field, an occupation state field, a Victim Priority field, and an Application ID field.

The Inband Tuner ID field identifies the inband tuners included in the exemplary cable broadcast receiver. Because there are three inband tuners 111 ~ 113 in the cable broadcast receiver, the Inband Tuner ID field identifies the three tuners: inband tuner #1, inband tuner #2, and inband tuner #3.

The occupation state field indicates whether an inband tuner is currently occupied. In this example, the occupation state field indicates that the inband tuner #1 and the inband tuner #3 are currently being "Used," and the inband tuner #2, is currently available, which is indicated as "Valid." Under this scenario, if the cable broadcast receiver were to receive firmware for firmware upgrade, for example, the firm upgrade controller 170 would select inband tuner #2 as the inband tuner to receive the firmware because inband tuner #2 is currently available.

The Victim Priority field identifies the priority of the inband tuner. The firmware upgrade controller 170 usually selects the inband tuner with the lowest priority number. Of course, the firmware upgrade controller 170 may select the inband tuner 170 based on the highest priority number in accordance with a desired design. In this example, the priority of the inband tuner is determined by the importance of the application that is currently occupying that inband tuner. In this example, when an inband tuner is available, such as inband tuner #2, the priority field is set to zero, and thereby assuring that the inband tuner #2 will be selected if the firmware upgrade controller is searching for an inband tuner to receive firmware upgrade, for example.

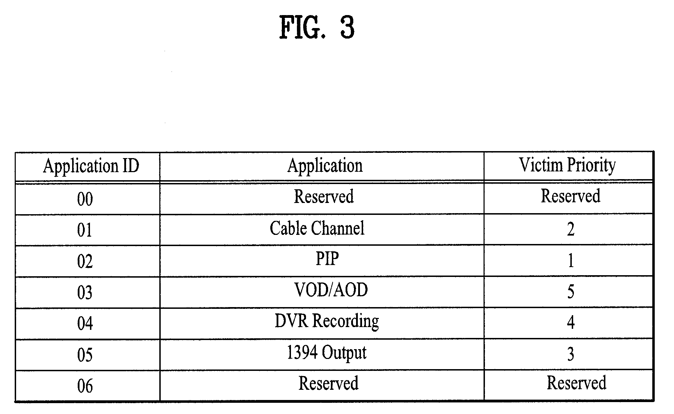

The Application ID field identifies applications and/or their identifiers currently occupying the inband tuners. Examples of the types of applications and application IDs are shown in FIG. 3. Referring to FIG. 2 and FIG. 3, The application ID field for inband tuner #1 has a value of 04, which means that there is a DVR recording of an application currently occupying the inband tuner #1. In other words, the inband tuner #1 is currently receiving an application that is being stored in a recoding medium through a DVR processor 160. As shown in FIG. 3, a DVR recording of an application is given a priority value of 4, which is the value of the Victim Priority field for inband tuner #1, as shown in FIG. 2.

Likewise, the application ID field for inband tuner #3 has a value of 01, which means, as shown in FIG. 3, there is a cable channel application currently occupying the inband tuner #3. A cable channel application is given a priority value of 2, which is the value of the the Victim Priority field for inband tuner #3, as shown in FIG. 2. It should be appreciated that the Victim Priority field values of FIG. 3, may be preset in the cable broadcast receiver or may be set by a user using a User Interface (UI).

In the above described embodiment, the firmware upgrade controller 170 determines an availability of the inband tuner by accessing the occupation state field. However, it should be appreciated that the availability of the inband tuner may be determined by accessing the Victim Priority field. For example, if the firmware upgrade controller 170 retrieves a Victim Priority field value of zero for a particular inband tuner, the firmware upgrade controller 170 will know that inband tuner is available for use. Alternatively the firmware upgrade controller 170 may select an inband tuner based on the order of priority in the Victim Priority field, in which case the occupation state field is omitted. In view of the above, many variations may be conceived after understanding the substance of the disclosure, and thus the scope of the claims should not be limited by the above-described embodiments.

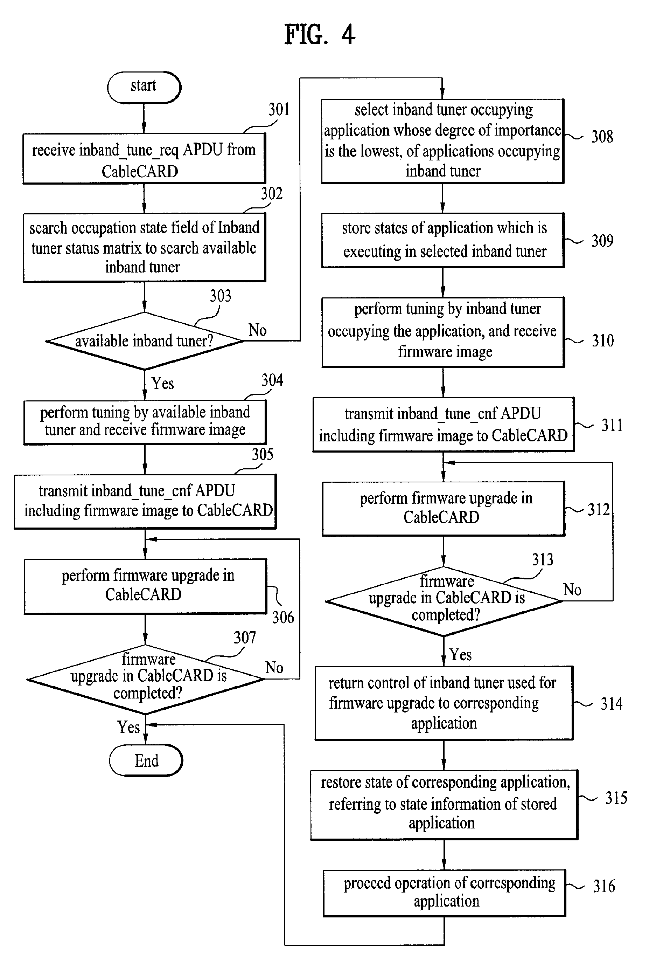

FIG. 4 illustrates an exemplary flow chart describing a method for upgrading firmware of a cable card according to one embodiment of the present invention. The flow chart may be a process performed by a controller. A process of the flow chart is now described.

At step 301, an inband tune request (inband_tune_req APDU) is received, for example, from a cable card. The process continues to step 302. At step 302, an occupation state field from an inband tuner status information table is retrieved. Then at step 303, a determination is made whether there is an available inband tuner based on the information of the occupation state field.

If the occupation state field indicates that there is an available inband tuner, then the process continues to step 304. At step 304, the available inband tuner is selected and configured so that the selected inband tuner may tune to a frequency forwarded by the cable card. Also, because the available inband tuner is now in use, the occupation state field is updated to reflect that the available inband tuner is now being used. The process continues to step 305.

At step 305, a confirmation (inband tune_cnf APDU) is forwarded to the cable card. The process continues to step 306. At step 306, the firmware upgrade is received through the selected inband tuner and forwarded to the cable card. Then, at step 307 a determination is made whether the firmware upgrade has been completed. If the firmware upgrade has not been completed, then the process returns to step 306 to continue receiving the firmware upgrade. Otherwise, if the firmware upgrade has been completed, then the process may release the inband tuner, indicate in the occupation state field that the inband tuner is available, and end.

On the other hand, at step 306, if there is no available inband tuner, the process continues to step 308. At step 308, the Victim Priority field may be accessed to determine which of the inband tuners has the lowest priority and the inband tuner with the lowest priority is selected as the Victim inband tuner. The process continues to step 309. At step 309, status information associated with the application occupying the Victim inband tuner is stored. Then at step 310, the selected Victim inband tuner is configured to tune to a frequency forwarded by the cable card. At step 311, a confirmation (inband tune_cnf APDU) is forwarded to the cable card. The process continues to step 312. At step 312, the firmware upgrade is received through the selected inband tuner and forwarded to the cable card. Then, at step 313 a determination is made whether the firmware upgrade has been completed. If the firmware upgrade has not been completed, then the process returns to step 312 to continue receiving the firmware upgrade. Otherwise, if the firmware upgrade has been completed, then the process continues to step 314 where the control of the inband tuner is returned to the application previously occupying the inband tuner. At step 315, the inband tuner is reconfigured based on stored status information of the previous application occupying the inband tuner. The process continues to step 316, where the application resumes operation using the inband tuner that it had previously occupied.

As such, when cable card firmware upgrade is needed in a cable broadcast receiver including multiple tuners, the firmware upgrade is received such that previously running applications are minimally interrupted. Therefore, the cable broadcast receiver has advantages in that it can allow other applications to perform their operations while the cable card firmware upgrade is performed, and thereby maintaining its operation efficiency.

Although the M-CARD is mentioned in the description, it can be appreciated that the embodiment can be modified to use a Single Stream CableCARD (S-CARD), multiple S-CARDs, or even multiple M-CARDs. Thus, such embodiments should not limit the scope of the claims.

Also, although the disclosure implies using an immediate upgrade method, it can be appreciated that the embodiment can be modified to use a delayed upgrade method. Thus, such embodiments should not limit the scope of the claims. Further, the present disclosure has been described using cable broadcast receivers, such as OpenCable digital TV or CableReady digital TV, etc., in which the cable broadcast receivers have terrestrial analog/digital channels, and cable analog/digital channels. With modifications known to those skilled in the art, the present disclosure can be implemented in any terrestrial wired (e.g., telephone) or wireless (e.g., cellular) networks and satellite networks.

It will be appreciated that, in various of the above-disclosed and other features and functions, or alternatives thereof, they may be implemented on a programmed microprocessor, a microcontroller, an integrated circuit element such as ASIC, PLD, PLA, FPGA, or PAL, or the like, a hardwired electronic or logic circuit, or a programmable logic device.

It will be appreciated that the described flow process or tables can be implemented as a self-consistent sequence of computerized steps that lead to a desired result. These steps can be defined by and/or in one or more computer instructions stored in a computer-readable medium, or can be encompassed using a signal, or provided as software instructions to a processing device. These steps can be performed by a processor executing the instructions that define the steps. Further, the flow process can be performed by a processor executing one or more appropriate programs, by special purpose hardware designed to perform the method, or any combination of such hardware, firmware and software elements.

It will be appreciated that various of the above-disclosed and other features and functions, or alternatives thereof, may be desirably combined into many other different devices or applications. Also, various presently unforeseen or unanticipated alternatives, modifications, variations or improvements therein may be subsequently made by those skilled in the art, and are also intended to be encompassed by the following claims.

## Claims

1. A host comprising:
a plurality of tuners;
a controller configured to receive a request for firmware; the controller further configured to select an unoccupied tuner from the plurality of tuners; and
the controller further configured to receive the firmware through the selected tuner.

2. The host as set forth in claim 1, wherein each of the plurality of tuners is occupied with a corresponding application, and wherein the controller is configured to select a tuner based on importance associated with the applications.

3. The host as set forth in claim 2, wherein the controller is configured to store status information associated with the application corresponding to the selected tuner.

4. The host as set forth in claim 3, wherein the controller is configured to restore the status information to the selected tuner so that the corresponding application can resume operation through the selected tuner after receiving the firmware.

5. The host as set forth in claim 2, wherein the controller is configured to refer to status information relating to the applications associated with each of the plurality of tuners when selecting a tuner to receive the firmware.

6. The host as set forth in claim 5, wherein the status information includes at least one of:
a tuner identifier that identifies a tuner;
an occupation identifier that identifies whether the tuner is occupied;
a priority identifier that identifies a priority of an application that is occupying the tuner; and
an application identifier that identifies the application occupying the tuner.

7. The host as set forth in claim 6, wherein the controller is configured to select a tuner using the priority identifier, when all the tuners are occupied.

8. The host as set forth in claim 1, wherein the controller is configured to forward the firmware to a source requesting the firmware.

9. The host as set forth in claim 8, wherein the source includes a cable card.

10. A method comprising the steps of:
receiving a request for firmware;
selecting an unoccupied tuner from a plurality of tuners; and
receiving the firmware through the selected tuner.

11. A processor executable medium having instructions contained therein, which when executed by a processor causes the processor to perform the method of claim 10.

12. The method as set forth in claim 10, wherein when all the tuners are occupied, the method further comprising the steps of:
selecting a tuner based on importance associated with applications that occupy each of the plurality of tuners; and
receiving the firmware through the selected tuner.

13. A processor executable medium having instructions contained therein, which when executed by a processor causes the processor to perform the method of claim 12.

14. The method as set forth in claim 12, further comprises the step of storing status information for the application associated with the selected tuner after the firmware has been received.

15. The method as set forth in claim 14, further comprises the step of restoring the status information to the selected tuner so that the corresponding application can resume operation through the selected tuner.

16. The method as set forth in claim 12, further comprises the step of referring to status information relating to the applications associated with each of the plurality of tuners when selecting a tuner to receive the firmware.

17. A processor executable medium having instructions contained therein, which when executed by a processor causes the processor to perform the method of claim 16.

18. The method as set forth in claim 16, further comprises the step of selecting a tuner based on priority, when all the tuners are occupied.

19. A processor executable medium having instructions contained therein, which when executed by a processor causes the processor to perform the method of claim 18.

20. The method as set forth in claim 10, further comprises the step of forwarding the firmware to a source requesting the firmware.
